Europäisches Patentamt

European Patent Office

Office européen des brevets

(19)

(11) Veröffentlichungsnummer: **0 257 385 B1**

(12) **EUROPÄISCHE PATENTSCHRIFT**

(45) Veröffentlichungstag der Patentschrift: 07.08.91

(51) Int. Cl.⁵: **H02P 9/42**, B63J 3/00

(21) Anmeldenummer: **87111309.8**

(22) Anmeldetag: **05.08.87**

(54) Schiffsantriebsanlage mit einem ein Bordnetz speisenden Generator.

(30) Priorität: **21.08.86 CH 3353/86**

(43) Veröffentlichungstag der Anmeldung:
**02.03.88 Patentblatt 88/09**

(45) Bekanntmachung des Hinweises auf die
Patenterteilung:
**07.08.91 Patentblatt 91/32**

(84) Benannte Vertragsstaaten:
**DE FR GB IT NL**

(56) Entgegenhaltungen:
**EP-A- 0 045 843**
**EP-A- 0 046 530**
**EP-A- 0 199 165**
**DE-A- 1 538 649**
**DE-A- 2 845 930**

(73) Patentinhaber: **GEBRÜDER SULZER AKTIENGE-
SELLSCHAFT**
**Zürcherstrasse 9**
**CH-8401 Winterthur(CH)**

(72) Erfinder: **Welle, Manfred**
**Rehweg 37**
**CH-8400 Winterthur(CH)**

## Beschreibung

Die Erfindung bezieht sich auf eine Anlage zum Antriebe eines Schiffes.

Die zum Stand der Technik gemäß Art. 54(3) gehörende EP-OS 0 199 165 beschreibt eine Anlage zum Antrieb eines Schiffes mittels eines mit dem Schiffspropeller gekuppelten Hubkolbendieselmotors, mit einer Nutzleistungsgasturbine, deren Gaseintritt mit dem Abgassystem des Hubkolbendieselmotors verbunden und über ein Untersetzungsgetriebe mit einem Generator gekuppelt ist, der in ein Bordnetz (14) speist. Bei dieser Anlage ist der Generator von einem Hilfsdieselmotor angetrieben und die Nutzleistungsgasturbine an ein freies Wellenende der Hilfsdiesel Generator-Einheit gekuppelt. In dieser Anlage wird die Drehzahl des Generators durch den Hilfsdieselmotor geregelt.

Aus der EP-OS 0 045 843 ist ein Verfahren zur Nutzung der Abwärmeenergie einer Verbrennungskraftmaschine bekannt, in dem die in dem Kühlmittel und den Abgasen enthaltene Wärmeenergie zum grossen Teil mittels einer Dampfturbine und einer als Generator arbeitenden Synchronmaschine in Elektroenergie umgewandelt wird. Der Wechselstrom wird über einen Umrichter an die Wechselstromverbraucher angepasst.

Der Erfindung liegt die Aufgabe zugrunde, bei einer Schiffsantriebsanlge der eingangs genannten Art eine einen Umrichter aufweisende Drehzahlregeleinrichtung zu verwenden, bei der die Uebertragung der gesamten Generatorleistung über den Umrichter vermieden wird, um die Anlage zu vereinfachen.

Diese Aufgabe wird erfindungsgemäss durch die Merkmale des Patentanspruchs gelöst. Da in der erfindungsgemässen Anlage für die Frequenzumrichtung nur eine sehr kleine Leistung aufgebracht werden muss, fällt der an sich verhältnismässig schlechte Wirkungsgrad des Frequenz-Umrichters hier nicht ins Gewicht. Mit der neuen Anlage erfolgt deshalb die Uebertragung der Leistung vom elektrischen Generator bis zum Bordnetz mit einem verbesserten Wirkungsgrad. Ueberdies ist die Anlage einfach und billig in ihrem Aufbau. Da vom Umrichter nur eine kleine Leistung aufgenommen wird, können ausserdem handelsübliche, in ihrer Kapazität verhältnismässig sehr kleine und damit auch viel kostengünstigere Bauteile für den Frequenz-Umrichter verwendet werden.

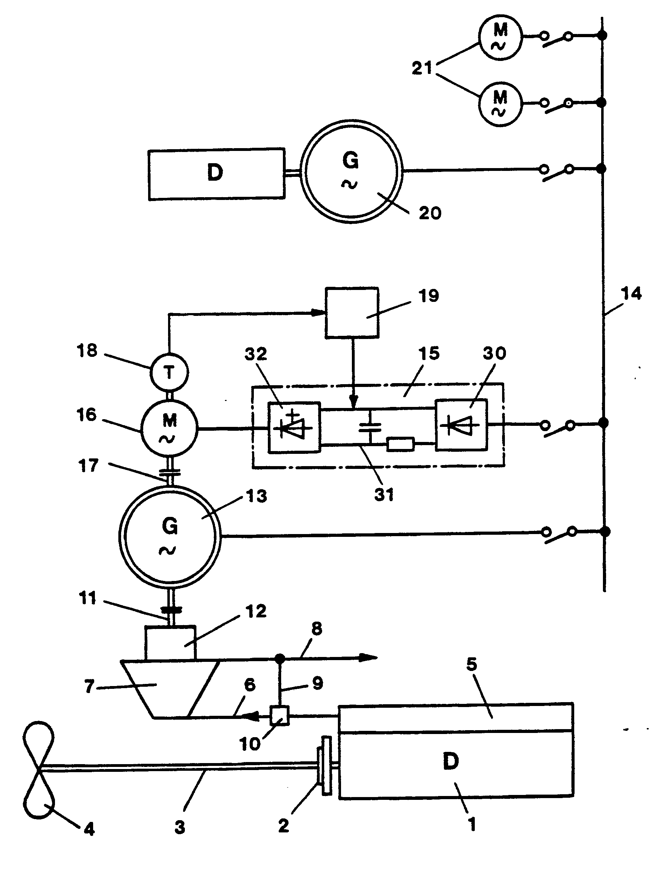

Ein Ausführungsbeispiel der Erfindung wird in der folgenden Beschreibung anhand der Zeichnung näher erläutert, die die Schiffsantriebs- und Bordnetz-Stromversorgungsanlage schematisch dargestellt zeigt.

Die Anlage weist eine Antriebsmaschine 1 auf, die nach dem Diesel-Zweitaktverfahren arbeitet und mehrere nicht dargestellte Zylinder enthält. Die Kurbelwelle der Antriebsmaschine 1 ist an ihrem in der Zeichnung linken Ende über eine Kupplung 2 mit einer Welle 3 verbunden, die an ihrem freien Ende einen Schiffsantriebspropeller 4 trägt. Die Antriebsmaschine 1 ist mit einem Abgassammler 5 versehen, der über eine Leitung 6 mit dem Eintritt einer Nutzleistungsgasturbine 7 verbunden ist. Am Austritt dieser Turbine 7 ist eine Abgasleitung 8 angeschlossen. Die Turbine 7 kann mit einer Bypassleitung 9 überbrückt werden, die zwischen den Leitungen 6 und 8 angeschlossen ist, wobei an der Abzweigstelle der Bypassleitung 9 von der Leitung 6 eine Abgasabsperrklappe 10 vorgesehen ist. Die Nutzleistungsgasturbine 7 ist über eine Welle 11 unter Zwischenschaltung eines Untersetzungsgetriebes 12 mit einem elektrischen Generator 13 gekuppelt, der die in ihm erzeugte elektrische Leistung in ein Bordnetz 14 des Schiffes liefert. Die überschüssige Abgasenergie kann somit als Elektroenergie in das Bordnetz eingespeist werden.

Für den Generator 13 ist eine Drehzahl-Regeleinrichtung vorgesehen, die einen statischen Frequenz-Umrichter 15 und einen Elektromotor 16 aufweist. Der als Drehstrommotor ausgebildete Elektromotor 16 ist über eine Welle 17 ebenfalls mit dem Generator 13 mechanisch gekuppelt. Der Frequenz-Umrichter setzt sich in an sich bekannter Weise aus einem mit dem Bordnetz 14 über einen Schalter verbundenen Gleichrichter 30, einem Gleichspannungs-Zwischenkreis 31 und einem mit dem Drehstrommotor 16 verbundenen Wechselrichter 32 zusammen.

Der Frequenz-Umrichter 15 wird zusammen mit dem Elektromotor 16 für das Hochfahren und für die stufenlose Drehzahlverstellung der aus der Nutzleistungsgasturbine 7 und dem Generator 13 bestehenden Einheit benutzt.

Zur Drehzahlregeleinrichtung gehören noch ein Messfühler 18 und ein Regler 19, dessen Eingang mit dem Messfühler und dessen Ausgang mit dem Gleichspannungs-Zwischenkreis 31 verbunden ist. Der Messfühler 18 erfasst die Drehzahl der Welle 17 und führt den gemessenen Ist-Wert dem Regler 19 zu. Hier wird dieser Ist-Wert mit einem vorgegebenen Soll-Wert für die Drehzahl verglichen. Bei einer Abweichung zwischen Ist-Wert und Soll-Wert wird über den Frequenz-Umrichter 15 dessen Ausgangsfrequenz und damit über den Drehstrommotor 16 die Drehzahl des Generators 13 korrigiert. Der Messfühler 18 kann als Tachogenerator ausgebildet sein.

Eine von der Stromerzeugungseinheit 7, 13 unabhängige Dieselgeneratorgruppe 20 ist ebenfalls mit dem Bordnetz 14 verbunden und liefert sowohl elektrische Energie in das Bordnetz 14 als auch die für das Hochfahren und für die Drehzahlregelung des Generators 13 notwendige elektrische Energie. Das Bordnetz 14 wird also immer zusätzlich und parallel zum Generator 13 von mindestens einer Dieselgeneratorgruppe 20 gespeist, die auch aus einem anderen Stromerzeugungsaggregat bestehen kann. An das Bordnetz 14 sind verschiedene Verbraucher 21 angeschlossen, wie Pumpenmotoren, Heizung, Klimaanlage, Transformatoren und dergleichen.

Die Antriebsmaschine 1 ist in üblicher, hier nicht dargestellter Weise mit einer Aufladegruppe ausgerüstet, deren Turbine ebenfalls von Abgas aus dem Abgassammler 5 beaufschlagt wird und dadurch einen Verdichter antreibt, der die den Zylindern der Hubkolbenbrennkraftmaschine 1 zuzuführende Verbrennungsluft komprimiert. Aufgrund einer optimierten Auslegung der Beschaufelung von Turbine und Verdichter besitzt die Aufladegruppe einen solch hohen Wirkungsgrad, dass zur Erzeugung der im oberen Lastbereich der Antriebsmaschine 1 notwendigen Ladeluftmenge und des notwendigen Luftdruckes nicht die gesamte verfügbare Abgasenergie verwendet werden muss; die überschüssige Abgasenergie kann also - ohne erhöhte Brennstoffzufuhr - für die Umwandlung in elektrische Energie nutzbar gemacht werden.

Im unteren Lastbereich der Antriebsmaschine 1, oder beim Erreichen der nach unten limitierten Basisleistung der Dieselgeneratorgruppe 20 und bei einer Havarie der Nutzleistungsgasturbine 7 wird mit Hilfe der Abgasabsperrklappe 10 und der Bypassleitung 9 die Gaszufuhr aus dem Abgassammler 5 zur Turbine 7 gestoppt und in die Abgasleitung 8 umgeleitet.

Die beschriebene Anlage funktioniert wie folgt: Während des Betriebes der Antriebsmaschine 1 in ihrem oberen Lastbereich wird Abgas aus dem Abgassammler 5 über die Leitung 6 der Nutzleistungsgasturbine 7 zugeführt, die damit über das Untersetzungsgetriebe 12 den Generator 13 antreibt. Hierbei wird die von der Antriebsmaschine 1 zur Verfügung gestellte Abgasüberschussenergie immer voll ausgenützt und als elektrischer Leistungsanteil an das Bordnetz 14 abgegeben. Mit Hilfe der Dieselgeneratorgruppe 20, des Frequenz-Umrichters 15 und des Elektromotors 16 wird die Stromerzeugungseinheit 7, 13 auf die Synchrondrehzahl hochgefahren. Ueber den Frequenz-Umrichter 15 wird nur die Frequenz des Generators 13 auf einen verlangten konstanten Wert geregelt.

Von der Dieselgeneratorgruppe 20 kann sowohl eine elektrische Basisleistung als auch die jeweils den Betrag: Basisleistung der Dieselgeneratorgruppe 20 + Leistung des Generators 13 übersteigende und geforderte elektrische Zusatzleistung direkt in das Bordnetz 14 eingespeist werden.

## Patentansprüche

1. Anlage zum Antrieb eines Schiffes mittels eines mit dem Schiffspropeller (4) gekuppelten Hubkolbendieselmotors (1), mit einer Nutzleistungsgasturbine (7), deren Gaseintritt mit dem Abgassystem des Hubkolbendieselmotors verbunden und über ein Untersetzungsgetriebe (12) mit einem Generator (13) gekuppelt ist, der in ein Bordnetz (14) speist, wobei eine zum Regeln der Frequenz des Generators (13) vorgesehene Drehzahlregeleinrichtung (15, 16, 17, 18, 19) einen Frequenz-Umrichter (15) und einen mit dem Generator (13) gekuppelten Elektromotor (16) aufweist, der über den Frequenz-Umrichter (15) aus dem Bordnetz (14) gespeist wird.

## Claims

1. A marine propulsion installation using a reciprocating diesel engine (1) coupled with the ship's propeller (4), the installation comprising a power gas turbine (7) whose gas intake is connected to the exhaust system of the diesel engine and is coupled by way of reduction gearing (12) with a generator (13) supplying a shipboard network (15-19), a speed control system (15 - 19) for controlling the frequency of the generator (13) having a frequency converter (13) and an electric motor (16) which is coupled with the generator (13) and which is supplied from the shipboard network (14) by way of the frequency converter (15).

## Revendications

1. Installation de commande d'un bateau au moyen d'un moteur Diesel à pistons alternatifs (1) couplé à l'hélice (4), comprenant une turbine à gaz (7) d'utilisation de la puissance utile, dont l'entrée des gaz communique avec le système d'échappement des gaz du moteur Diesel et qui est couplée par l'intermédiaire d'un train démultiplicateur (12) à une génératrice (13) qui alimente un réseau de bord (14), installation dans laquelle un dispositif de réglage de vitesse (15, 16, 17, 18, 19) prévu pour le réglage de la fréquence de la génératrice (13) comprend un convertisseur statique de fréquence (15) et un moteur électrique (16) couplé à la génératrice (13) et alimenté par le réseau de bord (14) par l'intermédiaire du convertisseur statique de fréquence (15).